# EUROPÄISCHE PATENTANMELDUNG

(11) **EP 2 234 075 A1**
(43) Veröffentlichungstag der Anmeldung: **29.09.2010**
(21) Anmeldenummer: 10155964.9
(22) Anmeldetag: 09.03.2010
(51) Int. Cl.: G07F 7/00, B60L 11/18

(54) **Autorisierter Stromverbraucher**

(30) Priorität: 26.03.2009 DE 102009015033
(71) Anmelder: Siemens Aktiengesellschaft, 80333 München (DE)
(72) Erfinder: Bußer, Jens-Uwe, 81739, München (DE); Fries, Steffen, 85598, Baldham (DE)

(57) **Zusammenfassung**

Öffentlich zugängliche Stromanschlüsse sind oftmals ungeschützt, so dass der Zugang zu ihnen prinzipiell möglich ist und es folglich durch Missbrauch zu einem Schaden für den Eigentümer der Steckdose kommen kann. Daher sind derartige Steckdosen oft durch einen mechanischen Schutz gesichert, was aber im kommerziellen Bereich zu organisatorischen Problemen führt. Die Erfindung ermöglicht die zentrale Autorisierung von Stromverbrauchern an vorgebbaren Steckdosen ("Stromanbietern"). Auf diese Weise kann die Stromzufuhr abhängig von dem Ergebnis der Autorisierung abgeschaltet werden, um unautorisierten Verbrauchern ("Stromklau") eine Energieentnahme zu verweigern.

## Beschreibung

### Beschreibung

### Autorisierter Stromverbraucher

Die vorliegende Erfindung betrifft ein System zum autorisierbaren Stromanschluss einer Stromquelle mit einem Verbraucher, insbesondere zum Schutz gegen eine unbefugte Nutzung durch einen Verbraucher, ein Verfahren zum autorisierbaren Stromanschluss einer Stromquelle mit einem Verbraucher, eine Steuereinrichtung zur Unterbrechung einer Energieabgabe einer Stromquelle sowie eine Authentisierungseinrichtung zur Freigabe einer Energieübertragung von einer Stromquelle zu einem Verbraucher.

Heutzutage werden oftmals Steckdosen in öffentlichen Bereichen zur Verfügung gestellt, die z.B. von Reinigungskräften benutzt werden können. Auch im privaten Bereich gibt es Steckdosen im Garten, auf der Veranda oder in der Garage, die für den Anschluss elektrischer Geräte benutzt werden können. Sind diese Steckdosen ungeschützt, also der Zugang zu ihnen prinzipiell möglich, kann es zu Missbrauch führen und der Eigentümer der Steckdose muss für den Schaden aufkommen.

Bisher wurden zum Schutz von frei zugänglichen Steckdosen mechanische Sicherungen in Form von Schlössern benutzt. Dies schützt jedoch nicht vor dem gewaltsamen Aufbrechen der Steckdose und dem Anschluss eines Verbrauchers, insbesondere dann, wenn die Steckdose nicht täglich überprüft wird.

Eine weitere Schutzmöglichkeit besteht in der Abschaltung des Stromes an der spezifischen Steckdose, wenn kein Verbraucher dafür angemeldet oder angeschlossen ist. Diese Methode ist im privaten Bereich sicher wirksam, im kommerziellen Bereich führt dies jedoch zu organisatorischen Problemen.

Vor diesem Hintergrund besteht die Aufgabe der vorliegenden Erfindung darin, einen Schutz gegen eine unbefugte Nutzung einer Stromquelle zu schaffen, der einfach und kostengünstig ausgebildet ist, und dabei dennoch einen sicheren Schutz vor einer unbefugten Nutzung bietet.

Erfindungsgemäß wird diese Aufgabe durch ein System, ein Verfahren, eine Steuereinrichtung und eine Authentisierungseinrichtung mit den Merkmalen der Patentansprüche 1, 4, 7 und 8 gelöst. Vorteilhafte Weiterbildungen der Erfindung sind in den abhängigen Ansprüchen angegeben.

Das erfindungsgemäße System zum autorisierbaren Stromanschluss einer Stromquelle mit einem Verbraucher über eine Stromleitung umfasst eine stromquellenseitige Steuereinrichtung und eine verbraucherseitige Authentisierungseinrichtung. Die verbraucherseitige Authentisierungseinrichtung sendet ein Autorisierungssignal an die stromquellenseitige Steuereinrichtung und die stromquellenseitige Steuereinrichtung überprüft das empfangene Autorisierungssignal. Bei erfolgloser Authentisierung wird die Energieübertragung über die Stromleitung an den Verbraucher durch die stromquellenseitige Steuereinrichtung unterbrochen. Bei erfolgreicher Autorisierung hingegen wird die Energieübertragung über die Stromleitung an den Verbraucher durch die stromquellenseitige Steuereinrichtung freigegeben.

Diese Erfindung ermöglicht somit die Autorisierung von Stromverbrauchern an bestimmten Steckdosen ("Stromanbietern"). Der autorisierte Zugang zu Stromanbietern ist sowohl im privaten als auch im öffentlichen Bereich interessant, um unautorisierte Verbraucher ("Stromklau") zu vermeiden. Weiterhin kann auf einen mechanischen Schutz verzichtet werden, da die Stromzufuhr abhängig von der Autorisierung abgeschaltet werden kann.
Gemäß einer vorteilhaften Ausgestaltung der vorliegenden Erfindung wird das Autorisierungssignal über die Stromleitung übertragen.

Diese vorteilhafte Ausgestaltung der Erfindung ermöglicht einen einfachen Aufbau des Schutzsystems, da außer der ohnehin erforderlichen Energieleitung keine Verbindung zwischen der Stromquelle und dem Verbraucher erforderlich ist.

In einer weiteren Ausgestaltung der Erfindung wird das Autorisierungssignal über Powerline Communication übertragen.

Das erfindungsgemäße Verfahren zum autorisierbaren Stromanschluss einer Stromquelle mit einem Verbraucher über eine Stromleitung umfasst die folgenden Schritte:
- Senden eines Autorisierungssignals durch eine Authentisierungseinrichtung des Verbrauchers zu einer Steuereinrichtung der Stromquelle,
- Überprüfen des Autorisierungssignals durch die Steuereinrichtung, um zu entscheiden ob der Verbraucher zu einer Energieentnahme aus der Stromquelle berechtigt ist;
- Freigeben der Energieübertragung wenn der Verbraucher zur Energieentnahme berechtigt ist;
- Unterbrechen der Energieübertragung wenn der Verbraucher nicht zur Energieentnahme berechtigt ist.

In einer vorteilhaften Ausgestaltung des erfindungsgemäßen Verfahrens wird die Energieübertragung unterbrochen, wenn das Autorisierungssignal nicht innerhalb einer ersten vorbestimmten Zeit von der Steuereinrichtung empfangen wird. Auf diese Weise kann beispielsweise erreicht werden, dass ein Verbraucher, der nicht über eine Authentisierungseinrichtung verfügt, Strom über den autorisierbaren Stromanschluss beziehen kann.

Die erfindungsgemäße Steuereinrichtung zur Unterbrechung einer Energieabgabe einer Stromquelle umfasst:
- eine Sende- und Empfangseinrichtung zum Senden und Empfangen von Autorisierungssignalen;
- eine Schalteinrichtung zum Unterbrechen der Energieabgabe der Stromquelle ; und
- eine Kontrolleinrichtung zum Überprüfen eines Autorisierungssignals und zum Ansteuern der Schalteinrichtung in Abhängigkeit des Überprüfungsergebnisses.

Die erfindungsgemäße Authentisierungseinrichtung die an einem Energieeingang eines Verbrauchers , der über einen Stromanschluss an eine Stromquelle anschließbar ist, angeordnet ist, umfasst zur Freigabe einer Energieübertragung von der Stromquelle zu dem Verbraucher:
- eine Sende- und Empfangseinrichtung zum Senden und Empfangen von Autorisierungssignalen,
- eine Kontrolleinrichtung zum Bilden von Autorisierungssignalen.

Die Erfindung wird nachfolgend anhand von Ausführungsbeispielen mit Hilfe der Figuren näher erläutert. Es zeigen:
- Figur 1: einen beispielhaften Aufbau einer Stromversorgung in einem Eigenheim mit einem autorisierbaren externen Stromkreislauf,
- Figur 2: in einer schematischen Darstellung den Ablauf eines erfindungsgemäßen Verfahrens zum autorisierbaren Stromanschluss einer Stromquelle mit einem Verbraucher.

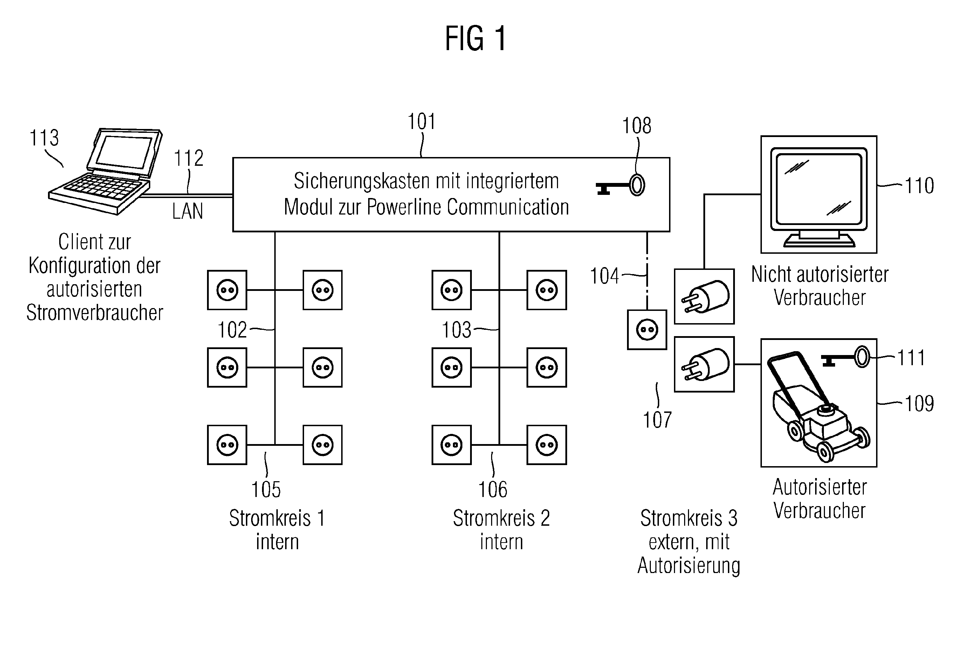

Die Figur 1 zeigt einen beispielhaften Aufbau einer Stromversorgung in einem Eigenheim. Die Bezugsziffer 101 bezeichnet einen Sicherungskasten mit einem integrierten Modul zur Powerline Communication. Über Energieleitungen 102, 103 und 104 ist der Sicherungskasten 101 mit zwei internen Stromkreisläufen 105, 106 und einem externen Stromkreislauf 107 verbunden. Die beiden internen Stromkreisläufe 105, 106 sind hierbei nicht autorisierbar und somit auf herkömmliche Weise mit dem Sicherungskasten verschaltet. Zum Anschluss des externen Stromkreislaufes ist jedoch stromquellenseitig eine Steuereinrichtung 108 vorgesehen, welche nach einer Überprüfung eines angeschlossenen Verbrauchers den externen Stromkreislauf freigibt oder unterbricht.

Weiterhin sind in Figur 1 zwei Verbraucher 109 und 110 dargestellt. Verbraucherseitig ist bei dem dargestellten ersten Verbraucher 109 eine Authentisierungseinrichtung 111 vorgesehen. Der Verbraucher 110 weist keine Authentisierungseinrichtung auf. Zudem ist der dargestellte Sicherungskasten 101 über eine Datenleitung 112 mit einer Konfigurationseinrichtung 113 verbindbar.

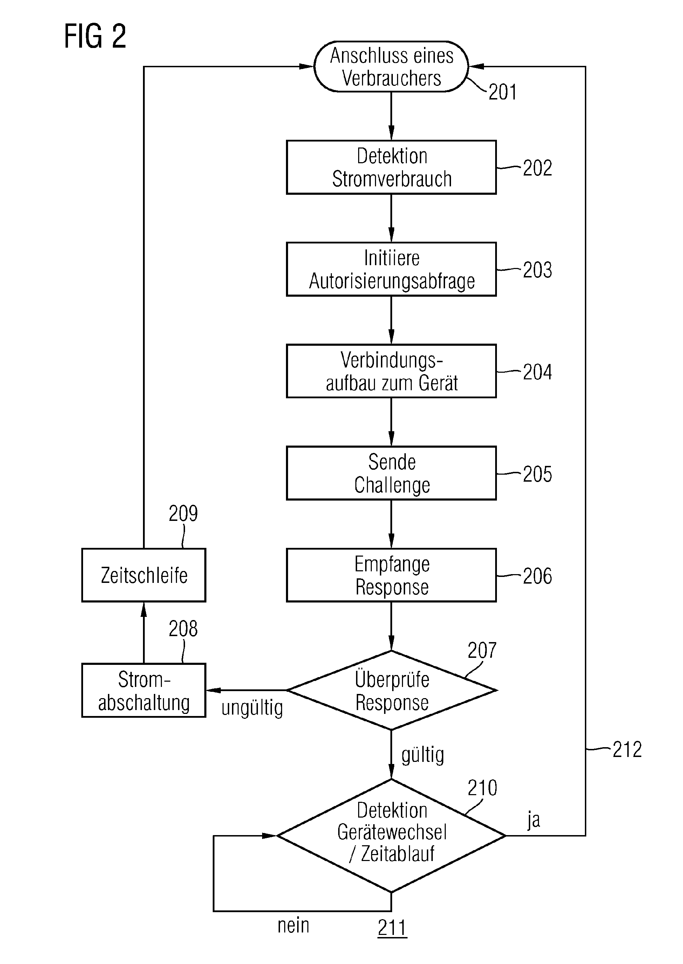

Im Folgenden wird ein Betrieb des in Figur 1 gezeigten Systems zum autorisierbaren Stromanschluss einer Stromquelle mit einem Verbraucher anhand der Figur 2 gezeigt.

Die Figur 2 zeigt in einer schematischen Darstellung den Ablauf eines erfindungsgemäßen Verfahrens zum autorisierbaren Stromanschluss einer Stromquelle mit einem Verbraucher. Hierbei wird zunächst ein Stromverbraucher an die autorisierbare Stromquelle angeschlossen 201. Stromquellenseitig wird der Stromverbrauch detektiert 202, beispielsweise durch einen herkömmlichen Stromzähler. Daraufhin wird durch die stromquellenseitige Steuereinrichtung eine Autorisierungsabfrage initiiert 203. Dazu wird zunächst eine Verbindung zu dem Verbraucher über Powerline Communication aufgebaut 204. Schlägt der Verbindungsaufbau fehl, wird der entsprechende Stromkreislauf bereits an dieser Stelle unterbrochen.

Über die aufgebaute Verbindung wird dann eine Challenge an die Authentisierungseinrichtung des Stromverbrauchers gesendet 205. Die durch die Authentisierungseinrichtung ermittelte Response wird daraufhin an die Steuereinrichtung übermittelt 206.

Im nächsten Schritt 207 erfolgt dann stromquellenseitig eine Überprüfung der Response auf ihre Gültigkeit. Ist die Resonse ungültig wird der Stromkreislauf unterbrochen 208. Die Dauer der Unterbrechung ist vorgebbar und wird hier anhand einer Zeitschleife 209 symbolisiert.

Ist die Response gültig bleibt der Stromkreislauf zunächst geschlossen. Hierbei ist es beispielsweise möglich, eine Zeitdauer vorzugeben, nach der eine weitere Autorisierungsabfrage initiiert wird. Weiterhin ist es denkbar, nach der Detektion eines Gerätewechsels oder auf Grundlage des gemessenen Stromverbrauchs eine weitere Autorisierungsabfrage zu initiieren.

In der gezeigten Ausgestaltung der Erfindung wird ein zentrales Steuermodul eingesetzt, das Zugriff auf die verschiedenen Stromkreise des Haushalts hat und über Powerline kommunizieren kann. Insbesondere ist dieses Steuermodul mit einem Abschaltmechanismus für dedizierte Stromkreise ausgestattet, der es ermöglicht, externe Steckdosen stromlos zu setzen. Das zentrale Steuermodul kann administriert werden, um dedizierte Verbraucher zu autorisieren.

Anstelle eines zentralen Steuermoduls ist es auch möglich, das Steuermodul dezentral in einem - dem potenziellen Angreifer physikalisch nicht zugänglichen - Bereich der Stromleitung einzubauen, wo es nur eine Leitung oder einen kleinen Zweig überwacht.

Weiterhin wird in dem gezeigten Ausführungsbeispiel davon ausgegangen, dass Geräte, die an öffentlich zugänglichen Steckdosen betrieben werden, ebenfalls ein Powerline Kommunikationsmodul besitzen. Sobald der Verbraucher an die Steckdose angeschlossen wird, wird die Powerline Verbindung aufgebaut und die Autorisierung des Gerätes überprüft. Dies kann anhand der Möglichkeiten eines Powerline Moduls (im Verbraucher) geschehen.

Alternativ kann anhand eines Challenge Response Verfahrens die Authentisierung überprüft werden, indem das zentrale Steuermodul eine Prüfzahl an das Modul des Verbrauchers sendet und dieser damit eine Berechnung, z.B. einen HMAC (keyed Hash) durchführt. Das Ergebnis (Response) wird dann an das zentrale Modul zurück gesendet, das wiederum diese Response überprüfen kann. Ist das Ergebnis positiv wird beispielsweise überwacht, ob die Stromverbindung unterbrochen wird. Wird dann ein anderes Gerät oder auch dasselbe Gerät wieder eingesteckt erfolgt die gleiche Prozedur. Gleichzeitig oder alternativ kann der Ablauf ebenso regelmäßig nach Ablauf einer festgesetzten Zeit initiiert werden. Ist das Ergebnis negativ, kann das zentrale Steuermodul den Strom an dieser speziellen Steckdose für einen gewissen Zeitraum abschalten.

Das für die Berechnung notwendige Geheimnis ist beispielsweise als Teil der Software/Firmware der Steuereinrichtung oder Authentisierungseinrichtung implementiert.

In einer weiteren Ausgestaltung ist das Geheimnis zur Berechnung der Response auf einem externen Chip ausgelagert, der die Berechnung der Response durchführen kann. Ein Beispiel dafür ist der ORIGA Chip von Infineon (http://www.infineon.com/ORIGA), der für den Plagiatschutz gedacht ist.

Eine weitere Ausgestaltung kann eine externe oder auch integrierte Smart Card verwenden, mit der dann auch digitale Signaturen möglich sind.

In einer weiteren Ausgestaltung kann statt den komplexen Powerline Communication Modulen eine einfache Einheit zur Modulation von eingeschränkten Signalen auf Stromleitungen benutzt werden (wie z.B. bei einem Babyphone).

In einer weiteren Ausgestaltung kann der Verbraucher mit der zentralen Steuereinrichtung drahtlos kommunizieren, z.B. über Bluetooth, WLAN, oder RFID.

Denkbare Anwendungsfälle des erfindungsgemäßen Systems sind beispielsweise:
- Tankstellen für Elektroautos
- Steckdosen in öffentlichen Gebäuden für Reinigungspersonal o. ä.
- Steckdosen in Tiefgaragen
- Steckdosen in Waschsalons
- Steckdosen im Gartenbereich, Veranda, etc.

## Patentansprüche

1. System zum autorisierbaren Stromanschluss einer Stromquelle mit einem Verbraucher über eine Stromleitung, umfassend eine stromquellenseitige Steuereinrichtung und eine verbraucherseitige Authentisierungseinrichtung, wobei die verbraucherseitige Authentisierungseinrichtung mindestens ein Autorisierungssignal an die stromquellenseitige Steuereinrichtung sendet, und die stromquellenseitige Steuereinrichtung das empfangene Autorisierungssignal überprüft, so dass die Energieübertragung über die Stromleitung an den Verbraucher bei erfolgloser Autorisierung durch die stromquellenseitige Steuereinrichtung unterbrochen wird und bei erfolgreicher Autorisierung freigegeben wird.

2. System nach Anspruch 1, wobei das Autorisierungssignal über die Stromleitung übertragen wird.

3. System nach Anspruch 2, wobei das Autorisierungssignal über Powerline Communication (PLC) übertragen wird.

4. Verfahren zum autorisierbaren Stromanschluss einer Stromquelle mit einem Verbraucher über eine Stromleitung, mit den folgenden Schritten:
- Senden eines Autorisierungssignals durch eine Authentisierungseinrichtung des Verbrauchers zu einer Steuereinrichtung der Stromquelle,
- Überprüfen des Autorisierungssignals durch die Steuereinrichtung, um zu entscheiden ob der Verbraucher zu einer Energieentnahme aus der Stromquelle berechtigt ist;
- Freigeben der Energieübertragung wenn der Verbraucher zur Energieentnahme berechtigt ist;
- Unterbrechen der Energieübertragung wenn der Verbraucher nicht zur Energieentnahme berechtigt ist.

5. Verfahren nach Anspruch 4, wobei die Energieübertragung und/oder Signalbildung mittels Kurzschließen einer Stromleitung zwischen der Stromquelle und dem Verbraucher unterbrochen wird.

6. Verfahren nach Anspruch 4 oder 5, wobei die Energieübertragung unterbrochen wird, wenn das Autorisierungssignal nicht innerhalb einer ersten vorbestimmten Zeit von der Steuereinrichtung empfangen wird.

7. Steuereinrichtung zur Unterbrechung einer Energieabgabe einer Stromquelle, umfassend:
- eine Sende- und Empfangseinrichtung zum Senden und Empfangen von Autorisierungssignalen;
- eine Schalteinrichtung zum Unterbrechen der Energieabgabe der Stromquelle ; und
- eine Kontrolleinrichtung zum Überprüfen eines Autorisierungssignals und zum Ansteuern der Schalteinrichtung in Abhängigkeit des Überprüfungsergebnisses.

8. Authentisierungseinrichtung die an einem Energieeingang eines Verbrauchers, der über einen Stromanschluss an eine Stromquelle anschließbar ist, angeordnet ist, zur Freigabe einer Energieübertragung von der Stromquelle zu dem Verbraucher, umfassend:
- eine Sende- und Empfangseinrichtung zum Senden und Empfangen von Autorisierungssignalen,
- eine Kontrolleinrichtung zum Bilden von Autorisierungssignalen.
